# EUROPÄISCHE PATENTSCHRIFT

(11) **EP 3 932 118 B1**
(45) Veröffentlichungstag und Bekanntmachung des Hinweises auf die Patenterteilung: **08.03.2023**
(21) Anmeldenummer: 20701751.8
(22) Anmeldetag: 23.01.2020
(51) Int. Cl.: H04W 52/02, H04W 84/18, H04W 88/06, H04L 12/28, G05B 19/418

(54) **VERFAHREN ZUM BETREIBEN EINES DRAHTLOSEN FELDGERÄTENETZWERKES**
METHOD FOR OPERATING A WIRELESS FIELD-DEVICE NETWORK
PROCÉDÉ D'EXPLOITATION D'UN RÉSEAU SANS FIL D'APPAREILS DE TERRAIN

(30) Priorität: 28.02.2019 DE 102019105096
(43) Veröffentlichungstag der Anmeldung: 05.01.2022
(73) Patentinhaber: Endress+Hauser SE+Co. KG, 79689 Maulburg (DE)
(72) Erfinder: PAUL, Tobias, 79650 Schopfheim (DE); STIB, Ralph, 79677 Schönau (DE); SCHÄUBLE, Harald, 79541 Lörrach (DE); GEIB, Patrick, 79713 Bad Säckingen (DE); GERWIG, Simon, 79650 Schopfheim (DE); FRANK, Mike, 79541 Lörrach (DE)
(74) Vertreter: Laufer, Michael
(86) Internationale Anmeldenummer: PCT/EP2020/051628
(87) Internationale Veröffentlichungsnummer: WO 2020/173625

(56) Entgegenhaltungen:
- WO-A1-2015/193849
- US-A1- 2013 035 093
- US-A1- 2016 026 194

## Beschreibung

Die Erfindung bezieht sich auf ein Verfahren zum Betreiben eines drahtlosen Feldgerätenetzwerkes.

In der Automatisierungstechnik, insbesondere in der Prozessautomatisierungstechnik, werden vielfach Feldgeräte in sogenannten Automatisierungsanlagen eingesetzt, die zur Erfassung und/oder Beeinflussung von Prozessgrößen dienen. Zur Erfassung von Prozessgrößen dienen Sensoren, wie beispielsweise Füllstandsmessgeräte, Durchflussmessgeräte, Druck- und Temperatur-messgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Antriebe, Aggregate, Ventile, Pumpen, über die der Durchfluss einer Flüssigkeit in einem Rohrleitungsabschnitt bzw. der Füllstand in einem Behälter geändert werden kann.

Ferner sollen vorliegend als Feldgeräte auch sogenannte Analysatoren verstanden werden, die auf Basis der Ramanspektroskopie, Tunable Diode Laser Technologie oder anderer optischer Verfahren, bspw. Nahinfrarot- oder UV-Technik, beruhen. Des Weiteren können auch Nasschemische Analysatoren als Feldgeräte zum Einsatz kommen.

Als Feldgeräte werden im Prinzip alle Geräte bezeichnet, die prozessnah eingesetzt werden und die prozessrelevante Informationen liefern oder verarbeiten.

Zunehmend werden leitungslose Feldgeräte mit Batterien oder Akkus eingesetzt, die üblicherweise in einem Feldgeräte-Cluster bzw. Feldgerätenetzwerk betrieben werden, um die zu erfassenden oder beeinflussenden Prozessgrößen miteinander drahtlos auszutauschen. Rein akkubetriebene Feldgeräte zeichnen sich dabei dadurch aus, dass auf das Zuführen einer Zweidrahtleitung ggfls. auch einer Vierdrahtleitung zur Energieversorgung der Feldgeräte und/oder zur Übertragung der Messwerte, bspw. mittels dem in der Automatisierungstechnik üblichen 4...20 mA Standard, verzichtet werden kann.

Der in der Automatisierungstechnik einsetzende Trend zur einfacheren Installation, verringerten Kosten und zu reduziertem Wartungsbedarf, sowie die Anforderung an eine lückenlose Erfassung von Informationen auch in unzugänglichen oder abwegigen Gebieten steigert den Bedarf an rein akkubetriebenen oder zumindest akkugestützten Feldgeräten weiter. Dem Trend folgend werden aktuell eine Vielzahl von Mechanismen zur Einsparung von Leistung und der besseren Vorhersagen zum aktuellen Leistungsstand sowie dem Leistungsbedarf entwickelt, woraus die zu erwartende Restlaufzeit respektive die Zeit bis zur nächsten Ladung des Akkus oder dem Batterielebensende immer präziser bestimmt werden soll.

Aus der US 2016/026194 A1 ist ein System und Verfahren zur Verwendung eines netzwerkfähigen, batteriebetriebenen Thermostats zur Überwachung und Steuerung von Heizungs-, Lüftungs- und Klimaanlagen (HVAC) bekannt geworden.

Der Erfindung liegt die Aufgabe zugrunde, eine Möglichkeit aufzuzeigen, mit der die Laufzeit von Feldgeräten in einem Feldgeräte-Cluster bzw. Feldgerätenetzwerk verlängert werden kann.

Die Aufgabe wird erfindungsgemäß gelöst durch das Verfahren gemäß Patentanspruch 1.

Das erfindungsgemäße Verfahren zum Betreiben eines drahtlosen Feldgerätenetzwerkes, welches eine Vielzahl von batterie- oder akkubetriebenen Feldgeräten umfasst, wobei jedes Feldgerät dazu eingerichtet ist, eine Prozessgröße zu bestimmen und/oder zu stellen und die Prozessgröße mittels eines ersten Funkmoduls drahtlos innerhalb des Feldgerätenetzwerkes zu übertragen bzw. zu empfangen, wobei jedes batterie- oder akkubetriebene Feldgerät ferner dazu eingerichtet ist, eine erwartete Restlaufzeit oder eine davon abgewandelte Größe, insbesondere eine normierte Größe, basierend auf einem aktuellen Ladezustand einer Batterie oder eines Akkus zu bestimmen und die erwartete Restlaufzeit oder die davon abgewandelte Größe mittels des ersten Funkmoduls drahtlos innerhalb des Feldgerätenetzwerkes zu übertragen bzw. zu empfangen, wobei jedes Feldgerät ferner ein zweites Funkmodul zur drahtlosen Datenübertragung mit einer übergeordneten Einheit, die nicht zu dem Feldgerätenetzwerk gehört, sieht folgende Schritte vor:
- Drahtlose Übertragung der Prozessgröße und der erwarteten Restlaufzeit von jedem Feldgerät an die anderen Feldgeräte durch das erste Funkmodul innerhalb des Feldgerätenetzwerkes, sodass in jedem Feldgerät zumindest die Prozessgröße und die erwartete Restlaufzeit der anderen Feldgeräte des Feldgerätenetzwerkes vorgehalten werden;
- Aktivieren des zweiten Funkmoduls desjenigen Feldgerätes, welches die höchste zu erwartende Restlaufzeit aufweist und Deaktivieren zumindest der zweiten Funkmodule der anderen Feldgeräte innerhalb des Feldgerätenetzwerks, sodass nur dasjenige Feldgerät aktiv ist, welches die höchste zu erwartende Restlaufzeit aufweist und zumindest die zweiten Funkmodule der anderen Feldgeräte deaktiviert sind;
- Drahtlose Übertragung der in dem aktiven Feldgerät vorgehaltenen Prozessgrößen aller Feldgeräte des Feldgerätenetzwerkes oder zumindest einer Teilmenge der vorgehaltenen Prozessgrößen an die übergeordnete Einheit, welche nicht Teil des Feldgerätenetzwerkes ist, durch das zweite Funkmodul des aktiven Feldgeräts.

Eine vorteilhafte Ausführungsform sieht vor, dass die drahtlose Übertragung der Prozessgrößen und/oder der erwarteten Restlaufzeiten oder die davon abgewandelte Größe innerhalb des Feldgerätenetzwerkes durch die ersten Funkmodule in einem Mesh-Netz oder einem Ad-hoc-Netz übertragen werden.

Eine weitere vorteilhafte Ausführungsform sieht vor, dass die Prozessgrößen und/oder die erwarteten Restlaufzeiten oder die davon abgewandelten Größen durch Broadcast-Telegramme mittels der ersten Funkmodule innerhalb des Feldgerätenetzwerkes übertragen werden.

Eine weitere vorteilhafte Ausführungsform sieht vor, dass die Prozessgrößen und/oder die erwarteten Restlaufzeiten oder die davon abgewandelten Größen in regelmäßigen Zeitabständen innerhalb des Feldgerätenetzwerkes übertragen werden, wobei wenigstens zur Dauer der Übertragung die ersten Funkmodule kurzzeitig aktiviert werden.

Eine weitere vorteilhafte Ausführungsform sieht vor, dass die Prozessgrößen und/oder die erwarteten Restlaufzeiten oder die davon abgewandelten Größen durch die ersten Funkmodule mit einer durchschnittlichen Dauerleistung der ersten Funkmodule im Bereich von ca. 1 mW bis 250 mW, bevorzugt bis 150 mW, besonders bevorzugt bis 100 mW übertragen werden.

Eine weitere vorteilhafte Ausführungsform sieht vor, dass die drahtlose Übertragung der Prozessgrößen aller Feldgeräte des Feldgerätenetzwerkes an die übergeordnete Einheit mit einer durchschnittlichen Dauerleistung der zweiten Funkmodule im Bereich von ca. 250 mW bis 5 W, bevorzugt im Bereich von ca. 500mW bis 5 W übertragen werden.

Eine weitere vorteilhafte Ausführungsform sieht vor, dass die drahtlose Übertragung zumindest der Prozessgrößen aller Feldgeräte des Feldgerätenetzwerkes an die übergeordnete Einheit zyklisch ohne eine Anfrage der übergeordneten Einheit durchgeführt wird.

Eine weitere vorteilhafte Ausführungsform sieht vor, dass die drahtlose Übertragung zumindest der Prozessgrößen aller Feldgeräte des Feldgerätenetzwerkes an die übergeordnete Einheit durch eine Anfrage der übergeordneten Einheit initiiert wird. Insbesondere kann die Ausführungsform vorsehen, dass die Anfrage durch Multicast-Telegramme an das Feldgerätenetzwerk durch die übergeordnete Einheit initiiert wird.

Eine weitere vorteilhafte Ausführungsform sieht vor, dass jedes Feldgerät ferner dazu eingerichtet ist, zumindest einen Teil seiner Parameter mittels des ersten Funkmoduls drahtlos innerhalb des Feldgerätenetzwerkes zu übertragen bzw. zu empfangen, und das Verfahren ferner die folgenden Schritte umfasst:
- Drahtlose Übertragung des zumindest einen Teils von Parametern von jedem Feldgerät an die anderen Feldgeräte innerhalb des Feldgerätenetzwerkes, sodass in jedem Feldgerät zumindest der Teil der Parameter der anderen Feldgeräte des Feldgerätenetzwerkes vorgehalten werden, und
- Drahtlose Übertragung zumindest des Teils der Parameter aller Feldgeräte des Feldgerätenetzwerkes an die übergeordnete Einheit durch das zweite Funkmodul des aktiven Feldgeräts die in dem aktiven Feldgerät vorgehalten werden.

Insbesondere kann die Ausführungsform vorsehen, dass in dem Fall, dass die übergeordnete Einheit eine Prozessgröße und/oder einen Parameter bei dem aktiven Feldgerät anfragt, welche bzw. welcher nicht in dem aktiven Feldgerät vorgehalten wird, das Verfahren ferner vorsieht, dass bei den Feldgeräten, bei denen zumindest das zweite Funkmodul deaktiviert ist, aktiv nach der Prozessgröße und/oder dem Parameter durch das aktive Feldgerät angefragt wird und die Prozessgröße und/oder den Parameter zu dem aktiven Feldgerät mittels des ersten Funkmoduls übertragen wird, und die Prozessgröße und/oder der Parameter mittels des zweiten Funkmoduls des aktiven Feldgeräts an die übergeordnete Einheit übertragen wird.

Insbesondere kann die Ausführungsform auch vorsehen, dass die Prozessgröße und/oder der Parameter zu dem aktiven Feldgerät mittels des ersten Funkmoduls im Zuge der Übertragung in regelmäßigen Zeitabständen übertragen wird. Ferner kann die Ausführungsform alternativ dazu vorsehen, dass die Prozessgröße und/oder der Parameter zu dem aktiven Feldgerät mittels des ersten Funkmoduls durch ein kurzfristiges Aktivieren des eigentlich deaktivierten Feldgerätes durchgeführt wird, sodass die Prozessgröße und/oder der Parameter sofort übertragen wird.

Die Erfindung wird anhand der nachfolgenden Zeichnungen näher erläutert. Es zeigt:
Fig. 1: eine aus dem Stand der Technik bekannte erste Methode zum Betreiben eines Feldgeräte-Clusters bzw. Feldgerätenetzwerkes,
Fig. 2: eine aus dem Stand der Technik bekannte zweite Methode zum Betreiben eines Feldgeräte-Clusters bzw. Feldgerätenetzwerkes, und
Fig. 3: ein Feldgeräte-Cluster bzw. ein Feldgerätenetzwerk, an dem die erfindungsgemäße Methode verdeutlicht werden soll.

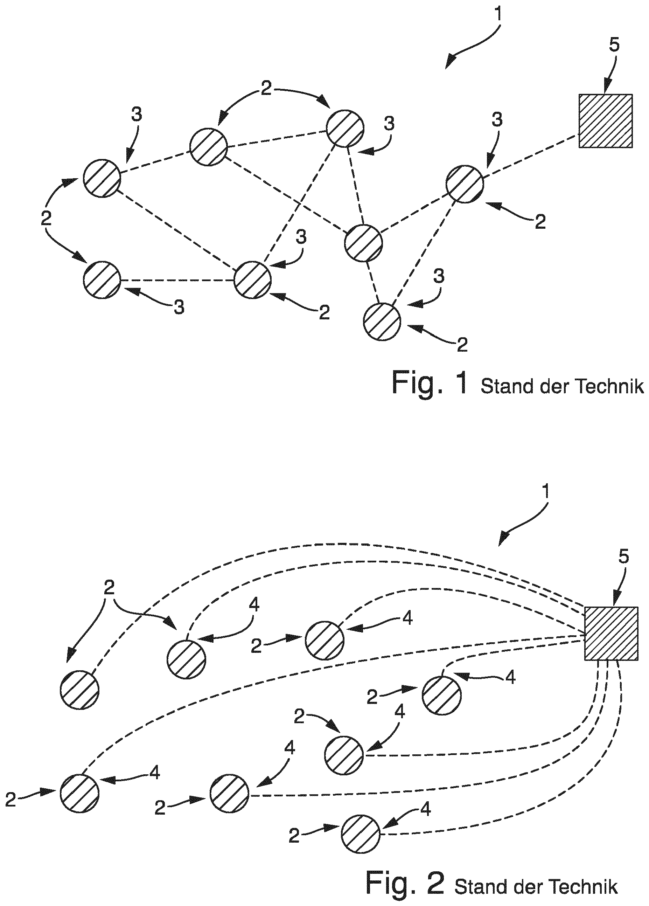

Figur 1 und Figur 2 zeigen aus dem Stand der Technik bekannte Feldgeräte-Cluster 1, die zur drahtlosen Datenübertragung eingesetzt werden. Jedes Cluster 1 besteht dabei aus mehreren räumlich nahegelegenen Feldgeräten 2. Jedes Feldgerät 2 dient dabei zur Erfassung und/oder zum Beeinflussen einer Prozessgröße in einer Automatisierungsanlage, um so einen Prozess auszuführen bzw. zu steuern. Hierbei können die Feldgeräte 2 verschiedene oder auch jeweils unterschiedliche Prozessgrößen erfassen oder beeinflussen. Zur Energieversorgung der einzelnen Feldgeräte 2 weisen diese jeweils einen Akku oder eine Batterie auf, die vorzugsweise in das Gehäuse des Feldgerätes eingebracht ist. Aber auch Varianten, bei denen der Akku oder die Batterie als separates, vorzugsweise ansteckbares Modul auf das Gehäuse des jeweiligen Feldgerätes angebracht werden, sind bekannt.

Hinsichtlich der drahtlosen Kommunikation gibt es aus dem Stand der Technik bekannte Methoden.

Zunächst gibt es die in Figur 1 dargestellte Methode, bei der zur drahtlosen Kommunikation zumindest der Prozessgröße und ggfls. auch anderer Daten innerhalb des Clusters 1 jedes Feldgerät 2 ein erstes Funkmodul 3 aufweist, über das mittels eines effizienten und leistungssparenden Funkprotokolls die Prozessgröße kommuniziert wird. Die ersten Funkmodule 3 benötigen hierbei zur drahtlosen Datenübertragung eine durchschnittliche Dauerleistung von vorzugsweise ca. 1 mW bis 250 mW, besonders bevorzugt eine Dauerleistung bis 150 mW, ganz besonders bevorzugt bis 100 mW. Durch ein effizientes und leistungssparendes Funkprotokoll gemäß dem die ersten Funkmodule 3 die Daten kommunizieren wird ein Sensor Cluster 1 aufgespannt, welches durch Meshed-Network-Protokolle ein Routing und Ansprechen jedes Feldgeräteteilnehmers innerhalb des Clusters ermöglicht, auch wenn der Teilnehmer nicht auf direktem Weg (z.B. in Form einer Punkt-zu-Punkt-Verbindung) erreichbar ist. Beispiele für derartige Protokolle sind: Bluetooth, ANT, Babel (RFC 6126), DSR (RFC 4728), AODV, ABR, DREAM, OLSR, ZRP, ZHLS, etc.. Typischerweise werden die Prozessgrößen mittels azyklischer oder zyklischer Kommunikation an eine übergeordnete Einheit 5 bzw. einen Master weitergeben. Hierfür ist die übergeordnete Einheit 5 mit nur einem einzigen Teilnehmer des Clusters funktechnisch über das leistungssparende erste Funkmodul 3 verbunden.

Ferner gibt es die in Figur 2 dargestellte Methode bei der die übergeordnete Einheit 5 räumlich außerhalb der Funkreichweite der leistungssparenden ersten Funkmodule 3 der Cluster-Teilnehmer angeordnet ist. Um dennoch eine drahtlose Datenübertragung zwischen den Feldgeräten 2 des Clusters 1 und der übergeordneten Einheit 5 zu ermöglichen, muss auf eine andere Physik mit einem anderen Frequenzband mit deutlich höherer Leistung gewechselt werden. Hierfür weisen die Feldgeräte 2 des Clusters jeweils ein zweites Funkmodul auf, welche eine durchschnittliche Dauerleistung im Bereich von vorzugsweise ca. 250 mW bis 5 W, besonders bevorzugt im Bereich von ca. 500mW bis 5 W zur Datenübertragung benötigen. Die Datenübertragung mit der übergeordneten Einheit findet bei dieser Methode direkt mit jedem einzelnen Teilnehmer 2 des Clusters 1 statt. Um die Batterie- oder Akkurestlaufzeit zu maximieren, kann vorgesehen sein, dass die Daten in kleinen Paketen und großen zeitlichen Abständen übertragen werden.

Die Erfindung geht nun von dem Ansatz aus, dass beide Methoden kombiniert werden und dass ferner jedem Clusterteilnehmer bzw. Feldgerät 2a, 2b des Clusters 1 die eigene Akku- oder Batterie-Restlaufzeit bekannt ist und diese den anderen Feldgeräten über das leistungssparende erste Funkmodul 3 übermittelt wird. Die Akku- oder Batterie-Restlaufzeit kann entweder in Form einer Zeiteinheit (Tag, Stunde, Minute) oder in Form eines normierten Wertes übertragen werden. Die Übertragung erfolgt vorzugsweise in definierten Zeitabständen. Dadurch, dass jedem Feldgerät 2a, 2b die eigene und die Restlaufzeit der anderen Feldgerät 2a, 2b bekannt ist, muss/kann nur das zweite Funkmodul 4 desjenigen Feldgeräts 2a aktiviert werden, welches die höchste zu erwartende Restlaufzeit aufweist. Die zweiten Funkmodule 4 der anderen Feldgeräte 2b können somit deaktiviert werden, umso Energie zu sparen. Hierbei können alle Prozessgrößen gemeinsam als ein Paket oder auch nur die Prozessgröße einzelner Feldgeräte 2b übertragen werden. Damit auch nur die Prozessgröße einzelner Feldgeräte 2b übertragen werden können, werden die Prozessgrößen mit einer feldgerätespezifischen Kennung, beispielsweise mit der Seriennummer des jeweiligen Feldgerätes, versehen. Neben der Seriennummer kann aber auch ein anderes eindeutiges Identifikationsmerkmal für die Feldgeräte verwendet werden.

Damit das Feldgerät 2a mit der höchsten erwartenden Restlaufzeit die Prozessgröße der anderen Feldgeräte 2b auch an die übergeordnete Einheit 5 übertragen kann, muss in jedem Feldgerät 2a, 2b die Prozessgröße der anderen Feldgeräte 2a, 2b vorgehalten werden. Dies kann beispielsweise derartig erfolgen, dass die Feldgeräte 2a, 2b des Clusters 1 ihre Prozessgröße durch Broadcast-Telegramme in dem Cluster 1 vorzugsweise über das leistungssparende erste Funkmodul 3 übertragen. Die Übertragung der Prozessgröße erfolgt vorzugsweise auch in regelmäßigen Zeitabständen, bspw. zusammen mit der Übertragung der Restlaufzeit. Es versteht sich von selbst, dass neben der Prozessgröße und der Restlaufzeit auch weitere Daten, insbesondere Konfigurations- und/oder Parametrierdaten der einzelnen Feldgeräte 2a, 2b drahtlos auf diese Weise übertragen werden können.

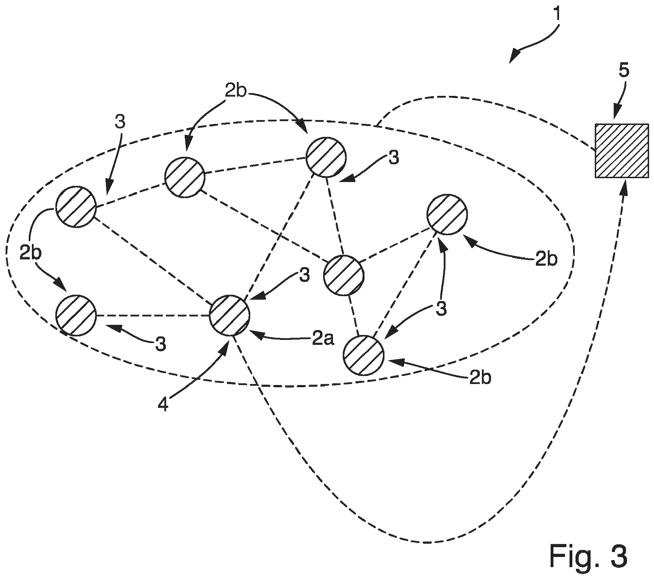

Durch die erfindungsgemäße Methode lässt sich der Leistungsbedarf des gesamten Clusters stark reduzieren, da nach außen hin nur ein zweites Funkmodul 4 des Feldgerätes 2a mit der höchsten zu erwartenden Restlaufzeit aktiv sein muss und die anderen deaktiviert sind. Somit bleibt nur das Feldgerät 2a mit der höchsten zu erwartenden Restlaufzeit mit seinem zweiten Funkmodul 4 für den eingehenden Funkverkehr der übergeordneten Einheit aktiv und stellt bei einer Anfrage der übergeordneten Einheit die Prozessgrößen zur Verfügung. Die übergeordnete Einheit weiß dabei nicht mit welchem Feldgerät sie sich konkret zur drahtlosen Datenübertragung verbindet, sondern sendet die Anfrage an das Cluster. Das Cluster 1 wirkt somit funktechnisch nach außen hin als eine Einheit. In Fig. 3 ist die Einheit schematisch durch die gestrichelte Ellipse dargestellt. Vorzugsweise sendet die übergeordnete Einheit 5 die Anfrage durch Multicast-Telegramme an eine Multicast-Adresse des Clusters.

Die erfindungsgemäße Methode ist dabei nicht nur auf den Fall beschränkt, bei dem die übergeordnete Einheit 5 aktiv nach den Prozessgrößen anfragt, sondern umfasst auch den Fall, dass das Cluster 1 von sich aus die Prozessgrößen in einem definierten Zeitintervall, beispielsweise einmal in der Woche oder einmal am Tag, an die übergeordnete Einheit überträgt.

Ferner kann die erfindungsgemäße Methode vorsehen, dass einzelne Feldgeräte 2b deren zweite Funkmodule 4 eigentlich deaktiviert sind, kurzfristig aktiviert werden. Dies kann beispielsweise bei Anfragen seitens der übergeordneten Einheit 5, bei einer Parametrisierung oder beim Ablauf des Intervalls in dem die Prozessgröße automatisch an die übergeordnete Einheit 5 übertragen wird, stattfinden. Aber auch in dem Fall, dass die Restlaufzeit des gerade aktiven Feldgerätes 2a unter die Restlauzeit eines anderen Feldgerätes sinkt, kann das zweite Funkmodul des Feldgerätes mit der dann höheren Restlaufzeit "geweckt" bzw. aktiviert werden, um die drahtlose Kommunikation mit der übergeordneten Einheit aufrechtzuerhalten.

In dem Fall, dass die übergeordnete Einheit 5 Daten (Prozessgröße, Parameter- und/oder Konfigurationswerte, etc.) von einem nicht aktiven Feldgerät 2b anfragt, kann das Verfahren vorsehen, dass das aktive Feldgerät 2a das nicht aktive Feldgerät 2b, dessen Daten angefragt wurden, "weckt", d.h. dessen zweites Funkmodul 4 aktiviert, und die Daten direkt von dem "geweckten" Feldgerät an die übergeordnete Einheit 5 übertragen werden. Alternativ kann vorgesehen sein, dass das aktive Feldgerät 2a wartet bis sich das nicht aktive Feldgerät 2b im Rahmen der zyklischen Kommunikation der Restlaufzeit und/oder Prozessgröße aktiviert und dann die Daten bei dem Feldgerät anfragt. Die angefragten Daten werden dann über das erste Funkmodul 3 zu dem Feldgerät 2a dessen zweites Funkmodul 4 aktiviert ist übertragen und von diesem weiter zur übergeordneten Einheit 5 mittels des zweiten Funkmoduls 4 übertragen.

## Patentansprüche

1. Verfahren zum Betreiben eines drahtlosen Feldgerätenetzwerkes (1) umfassend eine Vielzahl von batterie- oder akkubetriebenen Feldgeräten (2), wobei jedes Feldgerät (2) dazu eingerichtet ist, eine Prozessgröße zu bestimmen und/oder zu stellen und die Prozessgröße mittels eines ersten Funkmoduls (3) drahtlos innerhalb des Feldgerätenetzwerkes (1) zu übertragen bzw. zu empfangen, wobei jedes batterie- oder akkubetriebene Feldgerät (2) ferner dazu eingerichtet ist, eine erwartete Restlaufzeit oder eine davon abgewandelte Größe, insbesondere eine normierte Größe, basierend auf einem aktuellen Ladezustand einer Batterie oder eines Akkus zu bestimmen und die erwartete Restlaufzeit oder die davon abgewandelte Größe mittels des ersten Funkmoduls (3) drahtlos innerhalb des Feldgerätenetzwerkes (1) zu übertragen bzw. zu empfangen, wobei jedes Feldgerät (2) ferner ein zweites Funkmodul (4) zur drahtlosen Datenübertragung mit einer übergeordneten Einheit (5), die nicht zu dem Feldgerätenetzwerk (1) gehört, aufweist und wobei das Verfahren folgende Schritte vorsieht:
- Drahtlose Übertragung zumindest der Prozessgröße und der erwarteten Restlaufzeit von jedem Feldgerät (2) durch das erste Funkmodul (3) an die anderen Feldgeräte (2) innerhalb des Feldgerätenetzwerkes (1), sodass in jedem Feldgerät (2) zumindest die Prozessgröße und die erwartete Restlaufzeit der anderen Feldgeräte (2) des Feldgerätenetzwerkes vorgehalten werden;
- Aktivieren des zweiten Funkmoduls (4) desjenigen Feldgerätes (2a), welches die höchste zu erwartende Restlaufzeit aufweist und Deaktivieren zumindest der zweiten Funkmodule (4) der anderen Feldgeräte (2b) innerhalb des Feldgerätenetzwerks (1), sodass nur dasjenige Feldgerät (2) aktiv ist, welches die höchste zu erwartende Restlaufzeit aufweist und zumindest die zweiten Funkmodule der anderen Feldgeräte (2) deaktiviert sind;
- Drahtlose Übertragung der in dem aktiven Feldgerät (2a) vorgehaltenen Prozessgrößen aller Feldgeräte (2) des Feldgerätenetzwerkes (1) oder zumindest einer Teilmenge der vorgehaltenen Prozessgrößen an die übergeordnete Einheit (5), welche nicht Teil des Feldgerätenetzwerkes (1) ist, durch das zweite Funkmodul (4) des aktiven Feldgeräts (2a).

2. Verfahren nach Anspruch 1, wobei die drahtlose Übertragung der Prozessgrößen und/oder der erwarteten Restlaufzeiten oder die davon abgewandelte Größe innerhalb des Feldgerätenetzwerkes (1) durch die ersten Funkmodule (3) in einem Mesh-Netz oder einem Ad-hoc-Netz übertragen werden.

3. Verfahren nach Anspruch 1 oder 2, wobei die Prozessgrößen und/oder die erwarteten Restlaufzeiten oder die davon abgewandelten Größen durch Broadcast-Telegramme mittels der ersten Funkmodule (3) innerhalb des Feldgerätenetzwerkes (1) übertragen werden.

4. Verfahren nach einem der vorhergehenden Ansprüche, wobei die Prozessgrößen und/oder die erwarteten Restlaufzeiten oder die davon abgewandelten Größen in regelmäßigen Zeitabständen innerhalb des Feldgerätenetzwerkes (1) übertragen werden, wobei wenigstens zur Dauer der Übertragung die ersten Funkmodule kurzzeitig aktiviert werden.

5. Verfahren nach einem der vorhergehenden Ansprüche, wobei die Prozessgrößen und/oder die erwarteten Restlaufzeiten oder die davon abgewandelten Größen durch die ersten Funkmodule (3) mit einer durchschnittlichen Dauerleistung der ersten Funkmodule (3) im Bereich von ca. 1 mW bis 250 mW, bevorzugt bis 150 mW, besonders bevorzugt bis 100 mW übertragen werden.

6. Verfahren nach einem der vorhergehenden Ansprüche, wobei die drahtlose Übertragung der Prozessgrößen aller Feldgeräte des Feldgerätenetzwerkes an die übergeordnete Einheit (5) mit einer durchschnittlichen Dauerleistung der zweiten Funkmodule (4) im Bereich von ca. 250 mW bis 5 W, bevorzugt im Bereich von ca. 500mW bis 5 W übertragen werden.

7. Verfahren nach einem der vorhergehenden Ansprüche, wobei die drahtlose Übertragung zumindest der Prozessgrößen aller Feldgeräte (2) des Feldgerätenetzwerkes (1) an die übergeordnete Einheit (5) zyklisch ohne eine Anfrage der übergeordneten Einheit (5) durchgeführt wird.

8. Verfahren nach einem der vorhergehenden Ansprüche, wobei die drahtlose Übertragung zumindest der Prozessgrößen aller Feldgeräte (2) des Feldgerätenetzwerkes (1) an die übergeordnete Einheit (5) durch eine Anfrage der übergeordneten Einheit (5) initiiert wird.

9. Verfahren nach dem vorhergehenden Anspruch, wobei die Anfrage durch Multicast-Telegramme an das Feldgerätenetzwerk (1) durch die übergeordnete Einheit (5) initiiert wird.

10. Verfahren nach einem der vorhergehenden Ansprüche, wobei jedes Feldgerät (2) ferner dazu eingerichtet ist, zumindest einen Teil seiner Parameter mittels des ersten Funkmoduls (3) drahtlos innerhalb des Feldgerätenetzwerkes (1) zu übertragen bzw. zu empfangen, und das Verfahren ferner die folgenden Schritte umfasst:
- Drahtlose Übertragung des zumindest einen Teils von Parametern von jedem Feldgerät (2) an die anderen Feldgeräte (2) innerhalb des Feldgerätenetzwerkes (1), sodass in jedem Feldgerät (2) zumindest der Teil der Parameter der anderen Feldgeräte (2) des Feldgerätenetzwerkes (1) vorgehalten werden, und
- Drahtlose Übertragung zumindest des Teils der Parameter aller Feldgeräte (2) des Feldgerätenetzwerkes (1) an die übergeordnete Einheit (5) durch das zweite Funkmodul (4) des aktiven Feldgeräts (2a) die in dem aktiven Feldgerät (2a) vorgehalten werden.

11. Verfahren nach dem vorhergehenden Anspruch, wobei in dem Fall, dass die übergeordnete Einheit (5) eine Prozessgröße und/oder einen Parameter bei dem aktiven Feldgerät (2a) anfragt, welche bzw. welcher nicht in dem aktiven Feldgerät (2a) vorgehalten wird, das Verfahren ferner vorsieht, dass bei den Feldgeräten, bei denen zumindest das zweite Funkmodul deaktiviert ist (2b), aktiv nach der Prozessgröße und/oder dem Parameter durch das aktive Feldgerät (2a) angefragt wird und die Prozessgröße und/oder den Parameter zu dem aktiven Feldgerät (2a) mittels des ersten Funkmoduls (3) übertragen wird, und die Prozessgröße und/oder den Parameter mittels des zweiten Funkmoduls (4) des aktiven Feldgeräts (2a) an die übergeordnete Einheit (5) übertragen wird.

12. Verfahren nach dem vorhergehenden Anspruch, wobei die Prozessgröße und/oder der Parameter zu dem aktiven Feldgerät (2a) mittels des ersten Funkmoduls (3) im Zuge der Übertragung in regelmäßigen Zeitabständen übertragen wird.

13. Verfahren nach Anspruch 12, wobei die Prozessgröße und/oder der Parameter zu dem aktiven Feldgerät (2a) mittels des ersten Funkmoduls (3) durch ein kurzfristiges Aktivieren des eigentlich deaktivierten Feldgerätes (2b) durchgeführt wird, sodass die Prozessgröße und/oder der Parameter sofort übertragen wird.

## Claims

1. Procedure to operate a wireless field device network (1) comprising several field devices (2) powered by a battery or storage battery, wherein each field device (2) is designed to determine and/or to set a process variable and to transmit or receive the process variable wirelessly within the field device network (1) by means of a first wireless module (3), wherein each field device (2) powered by a battery or storage battery is further designed to determine an expected remaining operating time or a variable derived therefrom, particularly a standardized variable, on the basis of a current charge state of a battery or a storage battery and wirelessly transmit or receive the expected remaining operating time, or the variable derived therefrom, within the field device network (1) by means of the first wireless module (3), wherein each field device (2) further comprises a second wireless module (4) designed to transmit the data wirelessly with a higher-level unit (5) which does not belong to the field device network (1), and wherein the procedure provides for the following steps:
- Wireless transmission of at least the process variable and the expected remaining operating time of each field device (2) via the first wireless module (3) to the other field devices (2) within the field device network (1), such that at least the process variable and the expected remaining operating time of the other field devices (2) of the field device network are retained in each field device (2);
- Activation of the second wireless module (4) of the field device (2a) which has the highest expected remaining operating time and deactivation at least of the second radio modules (4) of the other field devices (2b) in the field device network (1) such that only the field device (2) that has the highest expected remaining operating time is active and at least the second radio modules of the other field devices (2) are deactivated;
- Wireless transmission of the process variables of all the field devices (2) of the field device network (1) retained in the active field device (2a), or at least a subset of the retained process variables, to the higher-level unit (5) which is not part of the field device network (1) using the second wireless module (4) of the active field device (2a).

2. Procedure as claimed in Claim 1, wherein the wireless transmission of the process variables and/or of the expected remaining operating times or the variable derived therefrom is performed in the field device network (1) by the first radio modules (3) in a mesh network or an ad hoc network.

3. Procedure as claimed in Claim 1 or 2, wherein the process variables and/or the expected remaining operating times or the variables derived therefrom are transmitted by broadcast telegrams by means of the first radio modules (3) within the field device network (1).

4. Procedure as claimed in one of the previous claims, wherein the process variables and/or the expected remaining operating times or the variables derived therefrom are transmitted at regular intervals within the field device network (1), wherein the first radio modules are activated briefly at least for the duration of the transmission.

5. Procedure as claimed in one of the previous claims, wherein the process variables and/or the expected remaining operating times or the variables derived therefrom are transmitted by the first radio modules (3) with an average continuous power of the first radio modules (3) in the range of approximately 1 mW to 250 mW, preferably up to 150 mW, particularly preferably up to 100 mW.

6. Procedure as claimed in one of the previous claims, wherein the wireless transmission of the process variables of all the field devices of the field device network to the higher-level unit (5) is performed with an average continuous power of the second radio modules (4) in the range of approximately 250 mW to 5 W, preferably in the range of approximately 500mW to 5 W.

7. Procedure as claimed in one of the previous claims, wherein the wireless transmission at least of the process variables of all the field devices (2) of the field device network (1) to the higher-level unit (5) is performed cyclically without a request of the higher-level unit (5).

8. Procedure as claimed in one of the previous claims, wherein the wireless transmission of at least the process variables of all the field devices (2) of the field device network (1) to the higher-level unit (5) is initiated by a request of the higher-level unit (5).

9. Procedure as claimed in the previous claim, wherein the request is initiated by the higher-level unit (5) by multicast telegrams to the field device network (1).

10. Procedure as claimed in one of the previous claims, wherein each field device (2) is further designed to wirelessly transmit or receive at least a subset of its parameters by means of the first wireless module (3) within the field device network (1), wherein the procedure further comprises the following steps:
- Wireless transmission of the at least one subset of parameters from each field device (2) to the other field devices (2) within the field device network (1), such that at least the subset of the parameters of the other field devices (2) of the field device network (1) is retained in each field device (2), and
- Wireless transmission of at least the subset of the parameters of all the field devices (2) of the field device network (1) that are retained in the active field device (2a) to the higher-level unit (5) by means of the second wireless module (4) of the active field device (2a).

11. Procedure as claimed in the previous claim, wherein, in the event that the higher-level unit (5) requests a process variable and/or a parameter from the active field device (2a) that is not retained in the active field device (2a), the procedure further provides that the field devices in which at least the second wireless module is deactivated (2b) are actively asked for the process variable and/or the parameter by the active field device (2a) and the process variable are transmitted to the active field device (2a) by means of the first wireless module (3), and the process variable and/or the parameter is transmitted to the higher-level unit (5) by means of the second wireless module (4) of the active field device (2a).

12. Procedure as claimed in the previous claim, wherein the process variable and/or the parameter is transmitted to the active field device (2a) by means of the first wireless module (3) during the transmission at regular intervals.

13. Procedure as claimed in Claim 12, wherein the process variable and/or the parameter is transmitted to the active field device (2a) by means of the first wireless module (3) by a brief activation of the field device (2b) that is actually deactivated, such that the process variable and/or the parameter is transmitted immediately.

## Revendications

1. Procédé destiné à l'exploitation d'un réseau d'appareils de terrain sans fil (1) comprenant une pluralité d'appareils de terrain (2) fonctionnant sur pile ou sur accumulateur, chaque appareil de terrain (2) étant conçu pour déterminer et/ou établir une grandeur de process et pour transmettre ou recevoir la grandeur de process sans fil au sein du réseau d'appareils de terrain (1) au moyen d'un premier module radio (3), chaque appareil de terrain (2) fonctionnant sur pile ou sur accumulateur étant en outre conçu pour déterminer un temps de fonctionnement restant attendu ou une grandeur qui en est dérivée, notamment une grandeur normalisée, sur la base d'un état de charge actuel d'une pile ou d'un accumulateur et pour transmettre ou recevoir, sans fil, le temps de fonctionnement restant attendu ou la grandeur qui en est dérivée au moyen du premier module radio (3) au sein du réseau d'appareils de terrain (1), chaque appareil de terrain (2) comprenant en outre un deuxième module radio (4) destiné à la transmission de données sans fil avec une unité hiérarchiquement supérieure (5) qui n'appartient pas au réseau d'appareils de terrain (1), et le procédé prévoyant les étapes suivantes :
- Transmission sans fil d'au moins la grandeur de process et du temps de fonctionnement restant attendu de chaque appareil de terrain (2) au moyen du premier module radio (3) aux autres appareils de terrain (2) au sein du réseau d'appareils de terrain (1), de sorte que dans chaque appareil de terrain (2), au moins la grandeur de process et le temps de fonctionnement restant attendu des autres appareils de terrain (2) du réseau d'appareils de terrain sont conservés ;
- Activation du deuxième module radio (4) de l'appareil de terrain (2a) qui présente le temps de fonctionnement restant attendu le plus élevé et désactivation d'au moins les deuxièmes modules radio (4) des autres appareils de terrain (2b) au sein du réseau d'appareils de terrain (1), de sorte que seul l'appareil de terrain (2) qui présente le temps de fonctionnement restant attendu le plus élevé est actif et qu'au moins les deuxièmes modules radio des autres appareils de terrain (2) sont désactivés ;
- Transmission sans fil des grandeurs de process conservées dans l'appareil de terrain actif (2a) de tous les appareils de terrain (2) du réseau d'appareils de terrain (1) ou d'au moins une quantité partielle des grandeurs de process conservées, à l'unité hiérarchiquement supérieure (5) qui ne fait pas partie du réseau d'appareils de terrain (1), au moyen du deuxième module radio (4) de l'appareil de terrain actif (2a).

2. Procédé selon la revendication 1, pour lequel la transmission sans fil des grandeurs de process et/ou des temps de fonctionnement restants attendus ou de la grandeur qui en est dérivée est effectuée au sein du réseau d'appareils de terrain (1) au moyen des premiers modules radio (3) dans un réseau maillé ou un réseau ad hoc.

3. Procédé selon la revendication 1 ou 2, pour lequel les grandeurs de process et/ou les temps de fonctionnement restants attendus ou les grandeurs qui en sont dérivées sont transmis par des télégrammes de diffusion au moyen des premiers modules radio (3) au sein du réseau d'appareils de terrain (1).

4. Procédé selon l'une des revendications précédentes, pour lequel les grandeurs de process et/ou les temps de fonctionnement restants attendus ou les grandeurs qui en sont dérivées sont transmis à intervalles de temps réguliers au sein du réseau d'appareils de terrain (1), les premiers modules radio étant activés brièvement au moins pour la durée de la transmission.

5. Procédé selon l'une des revendications précédentes, pour lequel les grandeurs de process et/ou les temps de fonctionnement restants attendus ou les grandeurs qui en sont dérivées sont transmis par les premiers modules radio (3) avec une puissance continue moyenne des premiers modules radio (3) dans la gamme d'environ 1 mW à 250 mW, de préférence jusqu'à 150 mW, particulièrement de préférence jusqu'à 100 mW.

6. Procédé selon l'une des revendications précédentes, pour lequel la transmission sans fil des grandeurs de process de tous les appareils de terrain du réseau d'appareils de terrain à l'unité hiérarchiquement supérieure (5) est transmise avec une puissance continue moyenne des deuxièmes modules radio (4) dans la gamme d'environ 250 mW à 5 W, de préférence dans la gamme d'environ 500mW à 5 W.

7. Procédé selon l'une des revendications précédentes, pour lequel la transmission sans fil d'au moins les grandeurs de process de tous les appareils de terrain (2) du réseau d'appareils de terrain (1) à l'unité hiérarchiquement supérieure (5) est effectuée de manière cyclique sans demande de l'unité hiérarchiquement supérieure (5).

8. Procédé selon l'une des revendications précédentes, pour lequel la transmission sans fil d'au moins les grandeurs de process de tous les appareils de terrain (2) du réseau d'appareils de terrain (1) à l'unité hiérarchiquement supérieure (5) est initiée par une demande de l'unité hiérarchiquement supérieure (5).

9. Procédé selon la revendication précédente, pour lequel la demande est initiée par des télégrammes de multidiffusion vers le réseau d'appareils de terrain (1) par l'unité hiérarchiquement supérieure (5).

10. Procédé selon l'une des revendications précédentes, pour lequel chaque appareil de terrain (2) est en outre conçu pour transmettre ou recevoir sans fil au moins une partie de ses paramètres au moyen du premier module radio (3) au sein du réseau d'appareils de terrain (1), le procédé comprenant en outre les étapes suivantes :
- Transmission sans fil d'au moins une partie des paramètres de chaque appareil de terrain (2) aux autres appareils de terrain (2) au sein du réseau d'appareils de terrain (1), de sorte que, dans chaque appareil de terrain (2), au moins la partie des paramètres des autres appareils de terrain (2) du réseau d'appareils de terrain (1) est conservée, et
- Transmission sans fil à l'unité hiérarchiquement supérieure (5), au moyen du deuxième module radio (4) de l'appareil de terrain actif (2a), d'au moins la partie des paramètres de tous les appareils de terrain (2) du réseau d'appareils de terrain (1) qui sont conservés dans l'appareil de terrain actif (2a).

11. Procédé selon la revendication précédente, pour lequel, dans le cas où l'unité hiérarchiquement supérieure (5) demande à l'appareil de terrain actif (2a) une grandeur de process et/ou un paramètre qui ne sont pas conservés dans l'appareil de terrain actif (2a), le procédé prévoit en outre que, pour les appareils de terrain dans lesquels au moins le deuxième module radio est désactivé (2b), la grandeur de process et/ou le paramètre sont demandés activement par l'appareil de terrain actif (2a) et la grandeur de process et/ou le paramètre sont transmis à l'appareil de terrain actif (2a) au moyen du premier module radio (3), et la grandeur de process et/ou le paramètre sont transmis à l'unité hiérarchiquement supérieure (5) au moyen du deuxième module radio (4) de l'appareil de terrain actif (2a).

12. Procédé selon la revendication précédente, pour lequel la grandeur de process et/ou le paramètre sont transmis à l'appareil de terrain actif (2a) au moyen du premier module radio (3) au cours de la transmission à intervalles réguliers.

13. Procédé selon la revendication 12, pour lequel la grandeur de process et/ou le paramètre sont transmis à l'appareil de terrain actif (2a) au moyen du premier module radio (3) par une activation de courte durée de l'appareil de terrain (2b) en fait désactivé, de sorte que la grandeur de process et/ou le paramètre sont transmis immédiatement.
